# EUROPEAN PATENT APPLICATION

(11) **EP 4 566 695 A1**
(43) Date of publication of application: **11.06.2025**
(21) Application number: 23865415.6
(22) Date of filing: 07.09.2023
(51) Int. Cl.: B01D 53/58, B01D 53/18, B01D 53/78, B63J 2/02, C02F 1/461

(54) **AMMONIA TREATMENT SYSTEM, FLOATING BODY**

(30) Priority: 15.09.2022 JP 2022146690
(71) Applicant: Mitsubishi Shipbuilding Co., Ltd., Tokyo 108-8015 (JP)
(72) Inventor: TAKAMATSU, Tomoteru, Yokohama-shi, Kanagawa 220-8401 (JP); YAMADA, Daisuke, Yokohama-shi, Kanagawa 220-8401 (JP); YOSHIDA, Atsushi, Yokohama-shi, Kanagawa 220-8401 (JP)
(74) Representative: Studio Torta S.p.A.
(86) International application number: PCT/JP2023/032762
(87) International publication number: WO 2024/058060

(57) **Abstract**

An ammonia treatment system according to the present invention comprises: an absorption tower that has a casing, a gas introduction part that introduces an ammonia gas that includes ammonia into the casing, a water sprinkling part that sprinkles water from an upper part of the inside of the casing and thereby absorbs the ammonia and generates ammonia water, and a water discharging part that discharges the ammonia water from a lower part of the casing; an ammonia component removal part that is provided outside the absorption tower and removes the ammonia component of the ammonia water to generate treated water; an ammonia water introduction line that introduces the ammonia water discharged from the water discharging part to the ammonia component removal part; and a first treated water supply line that supplies the treated water generated by the ammonia component removal part to the water sprinkling part.

## Description

### Technical Field

The present disclosure relates to an ammonia treatment system and a floating structure.

Priority is claimed on Japanese Patent Application No. 2022-146690, filed September 15, 2022, the content of which is incorporated herein by reference.

### Background Art

There is a possibility of ammonia leakage in rooms that house apparatuses, facilities, or the like that handle ammonia. Furthermore, in the above apparatuses, facilities, or the like that handle ammonia, purging with an inert gas that does not react with ammonia may be performed, and the remaining ammonia may be discharged together with the inert gas. Since ammonia may affect the mucous membranes of humans and cause damage, a gas containing ammonia generated by the above-described leakage, purging, or the like cannot be released into the atmosphere as it is.

PTL 1 discloses an ammonia gas removal system that performs a detoxification treatment on an ammonia gas leaked from a refrigeration unit before the ammonia gas is released into the atmosphere. In this removal system, a gas containing ammonia is led into a closed space such as a scrubber or a cooling tower and sufficiently brought into contact with water to adsorb an ammonia component in water. Next, carbon dioxide gas is supplied to the water in which the ammonia component is absorbed to neutralize the ammonia component, thereby lowering the ammonia concentration, and then the water is brought into contact with the untreated gas again.

### Citation List

### Patent Literature

[PTL 1] Japanese Unexamined Patent Application Publication No. 2006-26555

### Summary of Invention

### Technical Problem

However, in the configuration described in PTL 1, in order to lower the ammonia concentration of water in which the ammonia component is adsorbed, carbon dioxide gas is supplied to a closed space such as a scrubber or a cooling tower. In the scrubber, the cooling tower, or the like, an untreated gas containing ammonia is sequentially fed during the treatment of removing a gas containing ammonia. Therefore, water in which ammonia is adsorbed is also sequentially and continuously generated. Therefore, even in a case where carbon dioxide gas is supplied to the closed space such as a scrubber or a cooling tower, it is not always possible to sufficiently lower the ammonia concentration in water containing continuously generated ammonia.

The present disclosure has been made to solve the above problems, and an object of the present disclosure is to provide an ammonia treatment system and a floating structure that can sufficiently remove ammonia from water containing ammonia. Solution to Problem

In order to solve the above-described problems, an ammonia treatment system according to the present disclosure includes an absorption tower, an ammonia component removal unit, an ammonia water introduction line, and a first treated water supply line.

The absorption tower has a casing, a gas introduction part, a water sprinkling part, and a water discharging part. The gas introduction part introduces an ammonia gas containing ammonia into the casing. The water sprinkling part sprinkles water from an upper part of the casing and thereby absorbs the ammonia to generate ammonia water. The water discharging part discharges the ammonia water from a lower part of the casing. The ammonia component removal unit is provided outside the absorption tower. The ammonia component removal unit removes an ammonia component contained in the ammonia water to generate treated water. The ammonia water introduction line introduces the ammonia water discharged from the water discharging part into the ammonia component removal unit. The first treated water supply line supplies the treated water generated by the ammonia component removal unit to the water sprinkling part.

A floating structure according to the present disclosure includes a floating main structure and the above-described ammonia treatment system. The ammonia treatment system is provided in the floating main structure.

### Advantageous Effects of Invention

According to the ammonia treatment system and the floating structure of the present disclosure, ammonia can be sufficiently removed from water containing ammonia.

### Brief Description of Drawings

Fig. 1 is a side view of a floating structure including an ammonia treatment system according to an embodiment of the present disclosure.
Fig. 2 is a diagram showing a configuration of an ammonia treatment system according to a first embodiment of the present disclosure.
Fig. 3 is a diagram showing a configuration of an ammonia treatment system according to a second embodiment of the present disclosure.

### Description of Embodiments

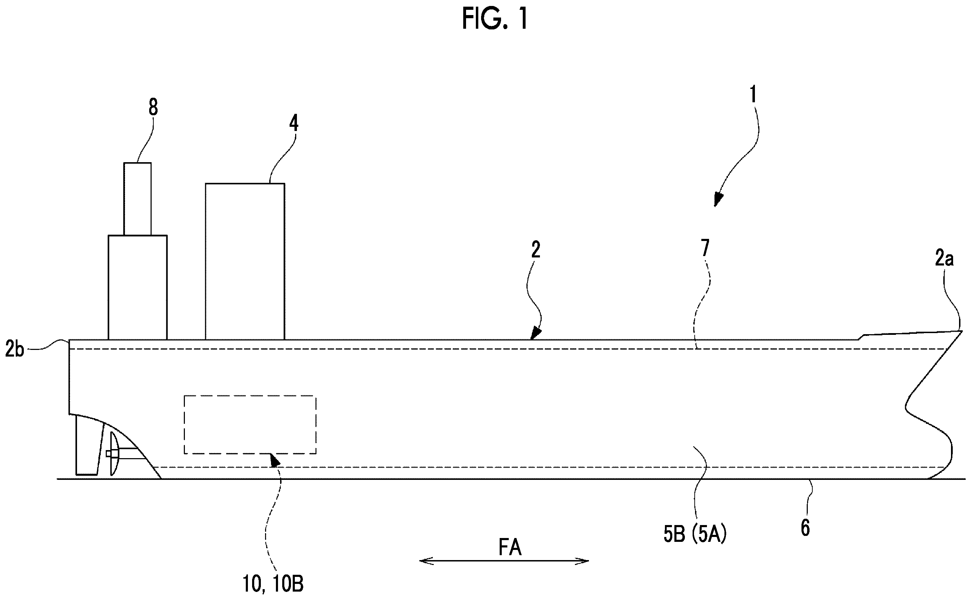

Hereinafter, an ammonia treatment system and a floating structure according to embodiments of the present disclosure will be described with reference to Figs. 1 to 3.

### <First Embodiment>

### (Configuration of Floating Structure)

As shown in Fig. 1, the floating structure 1 of the present embodiment includes a floating main structure 2, a superstructure 4, and an ammonia treatment system 10. The floating structure 1 of the first embodiment will be described as an example of a ship that can navigate by a main engine or the like. A ship type of the floating structure 1 is not limited to a specific ship type. Examples of the ship type of the floating structure 1 include a liquefied gas carrier, a ferry, a roll-on/roll-off (RORO) ship, a car carrier, and a passenger ship. In the first embodiment, a case where the floating structure 1 is a ship will be described, but the floating structure 1 is not limited to the ship and may be a floating storage unit (FSU), a floating storage and regasification unit (FSRU), or the like that cannot navigate by a main engine or the like.

The floating main structure 2 is formed to float on seawater. The floating main structure 2 includes a pair of broadsides 5A and 5B and a bottom 6 forming an outer shell of the floating main structure 2. The broadsides 5A and 5B include a pair of broadside skins respectively forming right and left broadsides. The bottom 6 includes a bottom skin connecting the broadsides 5A and 5B. The outer shell of the floating main structure 2 is U-shaped in a cross section perpendicular to a bow-stern direction FA by the pair of broadsides 5A and 5B and the bottom 6.

The floating main structure 2 further includes an upper deck 7 that is a through deck that is disposed in the uppermost layer. The superstructure 4 is formed on the upper deck 7. An accommodation space and the like are provided inside the superstructure 4. In the floating structure 1 of the first embodiment, for example, a cargo space (not shown) for loading cargo is provided closer to a bow 2a side in the bow-stern direction FA than the superstructure 4.

### (Overall Configuration of Ammonia Treatment System)

The ammonia treatment system 10 is provided in the floating main structure 2. In the first embodiment, the ammonia treatment system 10 is provided in the floating main structure 2. The ammonia treatment system 10 may be provided not only in the floating main structure 2 but also, for example, in other places, such as on the upper deck 7 of the floating main structure 2.

The ammonia treatment system 10 removes ammonia from a gas containing ammonia leaked from an ammonia facility that handles ammonia, a gas containing ammonia purged with an inert gas that does not react with ammonia and discharged together with the inert gas, or the like.

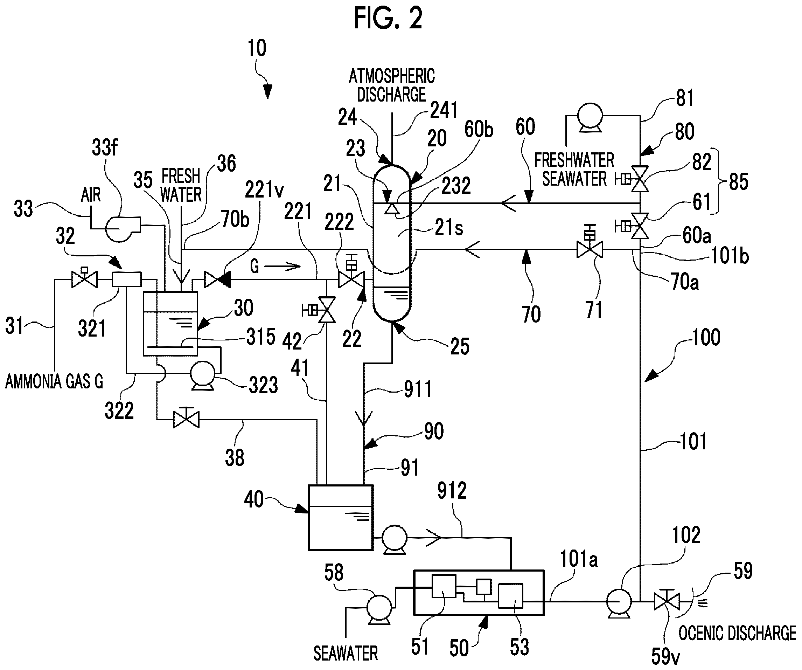

Fig. 2 is a diagram showing a configuration of an ammonia treatment system according to a first embodiment of the present disclosure.

As shown in Fig. 2, the ammonia treatment system 10 of the first embodiment includes at least an absorption tower 20, a dilution tank 30, an ammonia water storage tank 40, an ammonia component removal unit 50, an ammonia water introduction line 90, a treated water supply line 100, and an external water introduction unit 80.

The absorption tower 20 includes a casing 21, a gas introduction part 22, a water sprinkling part 23, a gas discharging part 24, and a water discharging part 25.

The casing 21 is formed in a tubular shape extending in the up-down direction. An ammonia water in which an ammonia component contained in an ammonia gas G is absorbed is capable of being stored in a lower part of an internal space 21s (inside the casing) of the casing 21.

The gas introduction part 22 is capable of introducing the ammonia gas G containing at least an ammonia component into the casing 21. The gas introduction part 22 includes a gas supply line 221 and an opening-closing valve 222.

One end of the gas supply line 221 is connected to the dilution tank 30 described below. The other end of the gas supply line 221 is connected to the casing 21. One end of the gas supply line 221 is open to the gas phase of the dilution tank 30, and the other end of the gas supply line 221 is open at a position above the liquid level of the ammonia water in the internal space 21s of the casing 21.

The opening-closing valve 222 opens and closes a flow path in the gas supply line 221. By opening and closing the opening-closing valve 222, the introduction of the ammonia gas G into the casing 21 through the gas supply line 221 is intermittently performed. In the first embodiment, the gas supply line 221 introduces the ammonia gas G diluted by the dilution tank 30 and having a reduced ammonia concentration into the internal space 21s of the casing 21. The ammonia gas G introduced into the internal space 21s of the casing 21 from the gas supply line 221 of the gas introduction part 22 rises from a lower part to an upper part in the internal space 21s of the casing 21.

The water sprinkling part 23 sprinkles water from the upper part in the casing 21 and thereby absorbs ammonia contained in the ammonia gas G to generate ammonia water. The water sprinkling part 23 includes a nozzle 232. A first treated water supply line 60, which will be described below, is connected to the nozzle 232. The nozzle 232 sprinkles water supplied from the first treated water supply line 60, from the upper part of the internal space 21s of the casing 21. The nozzle 232 sprinkles water into the internal space 21s of the casing 21 by jetting, dropping, spraying, or the like. The sprinkled water moves downward in the internal space 21s of the casing 21 due to its own weight. Then, in the process of moving through the internal space 21s of the casing 21, the sprinkled water comes into contact with the ammonia gas G rising from the lower part toward the upper part in the internal space 21s of the casing 21 and absorbs the ammonia component contained in the ammonia gas G. Accordingly, ammonia water is generated.

The gas discharging part 24 is capable of discharging gas in the internal space 21s from the upper part of the casing 21. One end of a gas discharge line 241 is connected to the gas discharging part 24. Examples of a connection destination of the other end (not shown) of the gas discharge line 241 include a funnel, a vent post, or the like. The gas discharging part 24 discharges the gas from which the ammonia component has been removed by the above-described sprinkling, to, for example, the atmosphere.

The water discharging part 25 discharges the ammonia water to the outside of the casing 21 from the lower part of the casing 21. The ammonia water introduction line 90, which will be described below, is connected to the water discharging part 25.

The dilution tank 30 is capable of storing the absorption water that absorbs ammonia. The dilution tank 30 dilutes the ammonia gas G to be introduced into the gas introduction part 22 of the absorption tower 20 in advance. The dilution tank 30 introduces the ammonia gas G containing ammonia into the absorption water to reduce the ammonia concentration of the ammonia gas G.

An ammonia introduction line 31 is connected to the dilution tank 30. The ammonia introduction line 31 introduces the ammonia gas G sent together with the inert gas when purged with the above-described inert gas, into the dilution tank 30.

A mixing part 32 is provided in the middle of the ammonia introduction line 31. The mixing part 32 mixes the ammonia in the ammonia introduction line 31 with the absorption water capable of absorbing the ammonia stored in the dilution tank 30. The mixing part 32 of the present embodiment includes a mixer 321, an absorption water supply line 322, and an absorption water circulation pump 323. The mixer 321 mixes the ammonia gas G with the absorption water before the ammonia gas G is introduced into the dilution tank 30. As the mixer 321, for example, an ejector or a microreactor can be used. By being mixed by the mixer 321 in this way, the ammonia gas G is easily absorbed in the absorption water. The absorption water supply line 322 supplies the absorption water in the dilution tank 30 to the mixer 321. The absorption water circulation pump 323 sends the absorption water of the absorption water supply line 322 to the mixer 321. A mixed fluid mixed by the mixing part 32 is introduced into the dilution tank 30.

A diffuser pipe 315 that releases a gas contained in the mixed fluid as small bubbles is provided at an outlet end of the ammonia introduction line 31. The diffuser pipe 315 extends along a bottom portion of the dilution tank 30 in the liquid phase of the dilution tank 30, and the bubbles contained in the mixed fluid released from the diffuser pipe 315 spread over the entire absorption water of the dilution tank 30. Accordingly, the ammonia gas G contained in the mixed fluid and the absorption water in the dilution tank 30 come into contact with each other, and the ammonia component contained in the ammonia gas G is easily absorbed in the absorption water in the dilution tank 30.

A dilution gas introduction line 33 is connected to the dilution tank 30. The dilution gas introduction line 33 is capable of introducing a dilution gas that reduces the ammonia concentration of the gas phase into the gas phase of the dilution tank 30. In other words, the dilution gas introduction line 33 is capable of adjusting the concentration of the ammonia gas in the gas phase of the dilution tank 30. Examples of the dilution gas include outside air. The dilution gas introduction line 33 is provided with a dilution fan 33f capable of adjusting a flow rate of the dilution gas fed into the gas phase of the dilution tank 30.

One end of an absorption water introduction line 35 for introducing absorption water from the outside is connected to the dilution tank 30. The other end of the absorption water introduction line 35 is connected to a fresh water introduction line 36 and a second treated water supply line 70 described below. The fresh water introduction line 36 supplies the fresh water stored in a fresh water tank of the floating main structure 2 as the absorption water.

The gas supply line 221 is connected to the dilution tank 30. The gas supply line 221 leads out the gas (diluted ammonia gas G) in the gas phase of the dilution tank 30 from the dilution tank 30 and supplies the gas to the casing 21. The gas supply line 221 is provided with a check valve 221v that prevents the backflow of the ammonia gas G from the casing 21 side. The gas introduction part 22 introduces the ammonia gas G diluted in the dilution tank 30 into the casing 21.

A diluted absorption water discharge line 38 is connected to the dilution tank 30. The diluted absorption water discharge line 38 is capable of discharging the absorption water of the dilution tank 30. One end of the diluted absorption water discharge line 38 is connected to the bottom portion of the dilution tank 30. The other end of the diluted absorption water discharge line 38 is connected to the ammonia water storage tank 40. The diluted absorption water discharge line 38 is capable of discharging the absorption water (ammonia water) in which ammonia is absorbed, to the ammonia water storage tank 40 in the dilution tank 30.

The ammonia water storage tank 40 is capable of storing the ammonia water discharged from the water discharging part 25 through the ammonia water introduction line 90 and the absorption water discharged from the dilution tank 30 through the diluted absorption water discharge line 38.

In addition, one end of the gas discharge line 41 is connected to the ammonia water storage tank 40. The other end of the gas discharge line 41 is connected to the middle of the gas supply line 221. The gas discharge line 41 is capable of supplying the ammonia gas separated from the ammonia water (ammonia water, absorption water) in the ammonia water storage tank 40 to the gas supply line 221. An opening-closing valve 42 is provided in the middle of the gas discharge line 41, and the opening and closing of the opening-closing valve 42 makes it possible to intermittently supply the ammonia gas from the gas phase of the ammonia water storage tank 40 to the gas supply line 221.

The ammonia component removal unit 50 is provided outside the absorption tower 20. The ammonia component removal unit 50 removes an ammonia component contained in the ammonia water to generate treated water. The ammonia component removal unit 50 removes the ammonia component contained in the ammonia water introduced from the ammonia water introduction line 90.

The ammonia water introduction line 90 introduces the ammonia water discharged from the water discharging part 25 into the ammonia component removal unit 50. The ammonia water introduction line 90 includes an introduction line body 91 and the above ammonia water storage tank 40 provided in the middle of the introduction line body 91. The introduction line body 91 connects the water discharging part 25 and the ammonia component removal unit 50 to each other. The introduction line body 91 has an introduction line upstream portion 911 on the absorption tower 20 side with respect to the ammonia water storage tank 40, and an introduction line downstream portion 912 on the ammonia component removal unit 50 side with respect to the ammonia water storage tank 40. The introduction line upstream portion 911 is provided between the water discharging part 25 and the ammonia water storage tank 40. The introduction line downstream portion 912 is provided between the ammonia water storage tank 40 and the ammonia component removal unit 50.

The ammonia component removal unit 50 removes the ammonia component contained in the ammonia water by using sodium hypochlorite obtained by electrolyzing seawater. Therefore, the ammonia treatment system 10 includes a water intake part 58. The water intake part 58 takes in seawater from the sea around the floating main structure 2.

The ammonia component removal unit 50 includes an electrolysis part 51 and a denitrification reaction part 53. The electrolysis part 51 generates a seawater electrolytic solution containing sodium hypochlorite by electrolyzing seawater taken from the water intake part 58. Specifically, the electrolysis part 51 disposes a positive electrode and a negative electrode (not shown) in the introduced seawater and applies a voltage between the positive electrode and the negative electrode to electrolyze the seawater. By this electrolysis, sodium hypochlorite is generated from the seawater.

The denitrification reaction part 53 causes the mixed solution of the seawater electrolytic solution generated in the electrolysis part 51 and the ammonia water to react. The denitrification reaction part 53 mixes and reacts the seawater electrolytic solution generated by the electrolysis with the ammonia water introduced from the ammonia water storage tank 40. More specifically, as shown in Formula (1), the denitrification reaction part 53 decomposes ammonia (2NH₃), which is contained in the ammonia water, and sodium hypochlorite (3NaClO) of the seawater electrolytic solution into nitrogen (N₂), sodium chloride (3NaCl), and water (3H₂O) by reacting the ammonia and the sodium hypochlorite in an acidic environment.

2NH₃ + 3NAClO → N₂ + 3NaCl + 3H₂O (1)

The nitrogen generated by the denitrification reaction in the denitrification reaction part 53 is released into the atmosphere via, for example, the funnel 8 or the like extending from the upper deck 7. On the other hand, the sodium chloride and water generated by the denitrification reaction are discharged to the discharge part 59 connected to the ammonia component removal unit 50 as the treated water. The discharge part 59 includes a discharge valve 59v, and discharges the treated water into surrounding seawater in which the floating main structure 2 floats by opening the discharge valve 59v.

The treated water supply line 100 supplies the treated water generated by the ammonia component removal unit 50 to the absorption tower 20 and the dilution tank 30. The treated water supply line 100 includes a main supply line 101, a first treated water supply line 60, and a second treated water supply line 70. One end 101a of the main supply line 101 is connected to the ammonia component removal unit 50. One end 60a of the first treated water supply line 60 and one end 70a of the second treated water supply line 70 are connected to the other end 101b of the main supply line 101. **In** other words, the treated water supply line 100 branches from the main supply line 101 to the first treated water supply line 60 and the second treated water supply line 70. A pump 102 that feeds the treated water generated in the ammonia component removal unit 50 to the first treated water supply line 60 and the second treated water supply line 70 is provided in the middle of the main supply line 101. The discharge part 59 is provided to branch from the main supply line 101 on the downstream side of the pump 102.

The other end 60b of the first treated water supply line 60 is connected to the nozzle 232 of the water sprinkling part 23. The first treated water supply line 60 supplies the treated water generated by the ammonia component removal unit 50 and sent through the main supply line 101 to the nozzles 232 of the water sprinkling part 23. A first opening-closing valve 61 is provided in the middle of the first treated water supply line 60. By opening and closing the first opening-closing valve 61, the supply of the treated water from the main supply line 101 to the water sprinkling part 23 through the first treated water supply line 60 can be intermittently performed.

The other end 70b of the second treated water supply line 70 is connected to the absorption water introduction line 35. The second treated water supply line 70 supplies the treated water generated by the ammonia component removal unit 50 and sent through the main supply line 101, as absorption water, to the dilution tank 30 via the absorption water introduction line 35. A second opening-closing valve 71 is provided in the middle of the second treated water supply line 70. By opening and closing the second opening-closing valve 71, the supply of the treated water from the main supply line 101 to the dilution tank 30 through the second treated water supply line 70 can be intermittently performed.

In such a treated water supply line 100, the first opening-closing valve 61 is opened, so that the treated water generated by the ammonia component removal unit 50 can be supplied to the water sprinkling part 23 through the main supply line 101 and the first treated water supply line 60. In addition, in the treated water supply line 100, the second opening-closing valve 71 is opened, so that the treated water generated by the ammonia component removal unit 50 can be supplied as absorption water to the dilution tank 30 through the main supply line 101 and the second treated water supply line 70.

The external water introduction unit 80 is capable of supplying water to the first treated water supply line 60 from the outside. The external water introduction unit 80 includes an external water introduction line 81 and a third opening-closing valve 82.

The external water introduction line 81 is connected to the middle of the first treated water supply line 60. Specifically, the external water introduction line 81 is joined and connected to the middle of the first treated water supply line 60 between the first opening-closing valve 61 and the water sprinkling part 23. For example, the water (for example, fresh water) stored in a water tank (not shown) provided in the floating main structure 2 or the water (for example, seawater or the like) taken in from the outside of the floating structure is supplied to the external water introduction line 81. The third opening-closing valve 82 is provided in the middle of the external water introduction line 81. The third opening-closing valve 82 is opened and closed, so that the introduction of water from the outside through the external water introduction line 81 into the first treated water supply line 60 can be intermittently performed.

The ammonia treatment system 10 includes a water switching part 85. The water switching part 85 is capable of switching the water supplied to the water sprinkling part 23 between the treated water supplied by the first treated water supply line 60 and the water introduced by the external water introduction unit 80. The water switching part 85 of the present embodiment is configured with the first opening-closing valve 61 and the third opening-closing valve 82. In the water switching part 85, the first opening-closing valve 61 is opened and the third opening-closing valve 82 is closed, so that the treated water can be supplied from the first treated water supply line 60 to the water sprinkling part 23. In addition, in the water switching part 85, the first opening-closing valve 61 is closed and the third opening-closing valve 82 is opened, so that the water supplied from the outside by the external water introduction line 81 can be supplied to the water sprinkling part 23.

### (Working Effects)

In the above first embodiment, the ammonia contained in the ammonia water is absorbed by sprinkling the ammonia gas G, which is introduced into the casing 21 from the gas introduction part 22, from the upper part in the casing 21 by the water sprinkling part 23. The ammonia water generated by absorbing ammonia is discharged from the lower part of the casing 21 by the water discharging part 25. The ammonia water discharged from the water discharging part 25 is introduced into the ammonia component removal unit 50 provided outside the absorption tower 20 by the ammonia water introduction line 90. In the ammonia component removal unit, the ammonia component contained in the introduced ammonia water is removed to generate treated water. The treated water generated by the ammonia component removal unit 50 is supplied to the water sprinkling part 23 of the absorption tower 20 by the first treated water supply line 60.

In this way, the ammonia component contained in the ammonia water is removed by the ammonia component removal unit 50 provided outside the absorption tower 20, so that ammonia can be sufficiently removed from the ammonia-containing water.

In addition, the treated water from which the ammonia component is removed for sprinkling in the absorption tower 20 is used, so that the amount of water introduced from the outside can be suppressed, and the ammonia treatment system 10 can be efficiently operated.

In addition, in the above first embodiment, the ammonia water discharged from the water discharging part 25 of the absorption tower 20 is stored in the ammonia water storage tank 40 through the introduction line body 91. Thereafter, the ammonia water stored in the ammonia water storage tank 40 is introduced into the ammonia component removal unit 50 provided outside the absorption tower 20 by the ammonia water introduction line 90. In this manner, the ammonia water discharged from the water discharging part 25 of the absorption tower 20 can be temporarily stored in the ammonia water storage tank 40 to some extent, and then supplied to the ammonia component removal unit 50. Therefore, it is not necessary to always operate the ammonia component removal unit 50, and energy saving can be achieved.

Furthermore, in the above first embodiment, by introducing the ammonia gas G into the absorption water in the dilution tank 30, the ammonia gas G having a diluted ammonia concentration is introduced into the casing 21 of the absorption tower 20, so that the ammonia can be more efficiently absorbed in the water in the absorption tower 20. In addition, in the dilution tank 30, the treated water generated by the ammonia component removal unit 50 is supplied as absorption water through the second treated water supply line 70. In this way, the amount of water to be introduced from the outside can be suppressed to effectively use the treated water generated by the ammonia component removal unit 50 and use the treated water as the absorption water in the dilution tank 30.

In addition, in the above first embodiment, the seawater electrolytic solution containing sodium hypochlorite is generated by electrolyzing the seawater taken from the water intake part 58 by the electrolysis part 51, and in the ammonia component removal unit 50, the denitrification reaction occurs by reacting the mixed solution of the ammonia water and the generated seawater electrolytic solution, and ammonia is removed from the ammonia water. In this way, in a case where seawater is used for removing ammonia, particularly in a case where such an ammonia treatment system is provided in the floating structure 1, seawater may be taken from the sea in which the floating structure 1 floats. Thus, sodium hypochlorite required for ammonia treatment can be easily acquired.

In addition, in the above first embodiment, the water introduced from the outside by the external water introduction unit 80 can be used as the water to be supplied to the water sprinkling part 23. Accordingly, it is possible to increase the options for water to be sprinkled by the water sprinkling part 23.

### <Second Embodiment>

Next, an ammonia treatment system according to a second embodiment of the present disclosure will be described. Since the second embodiment is different from the first embodiment only in that a treated water storage tank 200 is provided, the same parts as those in the first embodiment will be designated by the same reference numerals and will be described with reference to Fig. 1, and the duplicate description will be omitted.

### (Overall Configuration of Ammonia Treatment System)

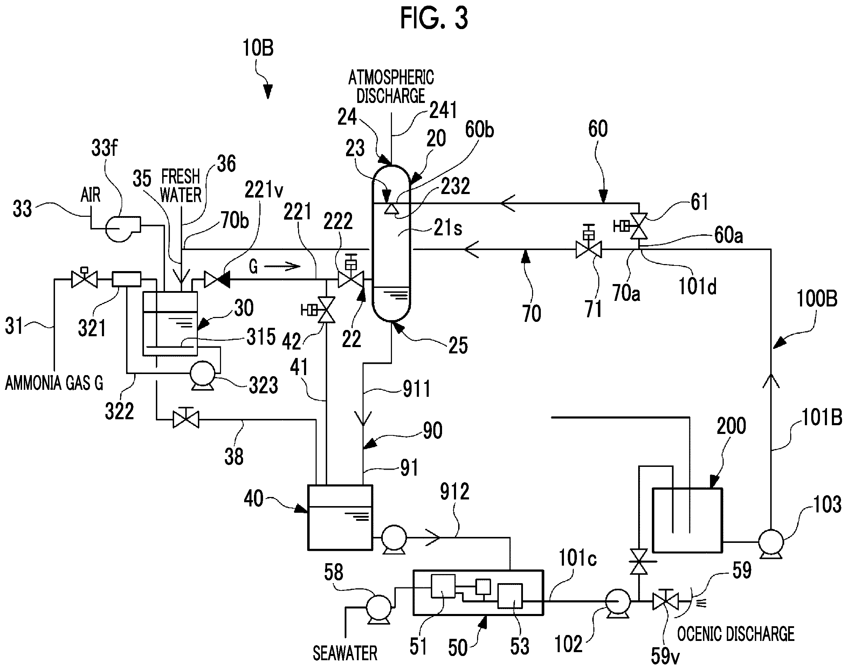

Fig. 3 is a diagram showing a configuration of the ammonia treatment system according to the second embodiment of the present disclosure.

As shown in Fig. 3, an ammonia treatment system 10B of the second embodiment includes at least the absorption tower 20, the dilution tank 30, the ammonia water storage tank 40, the ammonia component removal unit 50, the ammonia water introduction line 90, a treated water supply line 100B, and the treated water storage tank 200. The ammonia treatment system 10B does not include the external water introduction unit 80 shown in the first embodiment.

The treated water supply line 100B supplies the treated water generated by the ammonia component removal unit 50 to the absorption tower 20 and the dilution tank 30. The treated water supply line 100B includes a main supply line 101B, the first treated water supply line 60, and the second treated water supply line 70. One end 101c of the main supply line 101B is connected to the ammonia component removal unit 50. The other end 101d of the main supply line 101B is connected to one end 60a of the first treated water supply line 60 and one end 70a of the second treated water supply line 70.

The treated water storage tank 200 is provided in the middle of the main supply line 101B. The treated water storage tank 200 stores the treated water generated in the ammonia component removal unit 50. The treated water storage tank 200 functions as a so-called buffer tank capable of temporarily storing the treated water. A pump 103 that feeds the treated water stored in the treated water storage tank 200 to the first treated water supply line 60 and the second treated water supply line 70 is provided in the main supply line 101B on the downstream side of the treated water storage tank 200. In the treated water storage tank 200 exemplified in the second embodiment, fresh water or seawater can be injected from the inside or outside of the floating structure 1. With such a water-injectable configuration, for example, in a case where ammonia remains in the treated water stored in the treated water storage tank 200, it is possible to reduce the ammonia concentration of the treated water.

The first treated water supply line 60 supplies the treated water stored in the treated water storage tank 200 to the water sprinkling part 23. Specifically, the first treated water supply line 60 supplies the treated water sent from the treated water storage tank 200 via the main supply line 101B by the pump 103 to the water sprinkling part 23. In addition, the second treated water supply line 70 supplies the treated water stored in the treated water storage tank 200 to the dilution tank 30. Specifically, the second treated water supply line 70 supplies the treated water sent from the treated water storage tank 200 via the main supply line 101B by the pump 103 to the dilution tank 30.

### (Working Effects)

In the ammonia treatment system 10B of the above second embodiment, as in the first embodiment, the ammonia component removal unit 50 provided outside the absorption tower 20 removes the ammonia component contained in the ammonia water, so that ammonia can be sufficiently removed from water containing ammonia.

In addition, in the above second embodiment, the treated water generated in the ammonia component removal unit 50 is stored in the treated water storage tank 200 and then supplied to the water sprinkling part 23 through the first treated water supply line 60. Accordingly, the influence of the generation status of the treated water in the ammonia component removal unit 50 can be suppressed, and the treated water can be stably supplied from the treated water storage tank 200 to the water sprinkling part 23.

### (Other Embodiments)

The embodiments of the present disclosure have been described in detail above with reference to the drawings. However, the specific configuration is not limited to each embodiment, and includes design changes or the like without departing from the scope of the present disclosure.

For example, in the above embodiments, the treated water generated in the ammonia component removal unit 50 is supplied to the water sprinkling part 23 and the dilution tank 30. However, the present invention is not limited thereto. For example, the treated water may be supplied to other supply targets.

In addition, in a case where sodium hypochlorite remains in the treated water generated in the ammonia component removal unit 50, the treated water generated in the ammonia component removal unit 50 may be used to prevent marine products from being attached to the floating structure 1.

In addition, the ammonia component removal unit 50 is not limited to the one having the denitrification reaction part 53 as long as the ammonia component contained in the ammonia water can be removed to generate treated water, and another types may be appropriately used.

### <Additional Notes>

The ammonia treatment system 10 or 10B and the floating structure 1 described in each embodiment are understood as follows, for example.
(1) An ammonia treatment system 10 or 10B according to a first aspect includes an absorption tower 20 having a casing 21, a gas introduction part 22 that introduces an ammonia gas G containing ammonia into the casing 21, a water sprinkling part 23 that sprinkles water from an upper part of the casing 21 and thereby absorbs the ammonia to generate ammonia water, and a water discharging part 25 that discharges the ammonia water from a lower part of the casing 21; an ammonia component removal unit 50 that is provided outside the absorption tower 20 and removes an ammonia component contained in the ammonia water to generate treated water; an ammonia water introduction line 90 that introduces the ammonia water discharged from the water discharging part 25 into the ammonia component removal unit 50; and a first treated water supply line 60 that supplies the treated water generated by the ammonia component removal unit 50 to the water sprinkling part 23.

According to the ammonia treatment system 10 or 10B, in the absorption tower 20, the ammonia gas G introduced into the casing 21 from the gas introduction part 22 is sprinkled with water from the upper part of the casing 21 by the water sprinkling part 23, so that the ammonia contained in the ammonia gas G is absorbed in water. The ammonia water generated by absorbing ammonia is discharged from the lower part of the casing 21 by the water discharging part 25. The ammonia water discharged from the water discharging part 25 is introduced into the ammonia component removal unit 50 provided outside the absorption tower 20 by the ammonia water introduction line 90. In the ammonia component removal unit, the ammonia component contained in the introduced ammonia water is removed to generate treated water. The treated water generated by the ammonia component removal unit 50 is supplied to the water sprinkling part 23 of the absorption tower 20 by the first treated water supply line 60.

In this way, by removing the ammonia component contained in the ammonia water in the ammonia component removal unit 50 provided outside the absorption tower 20, it is possible to sufficiently remove ammonia from the water containing ammonia.

In addition, by using the treated water from which the ammonia component is removed for sprinkling in the absorption tower 20, the amount of water introduced from the outside can be suppressed, and the ammonia treatment system 10 or 10B can be efficiently operated.

(2) The ammonia treatment system 10B according to a second aspect is the ammonia treatment system 10B of (1), further including a treated water storage tank 200 that stores the treated water generated by the ammonia component removal unit 50, in which the first treated water supply line 60 supplies the treated water stored in the treated water storage tank 200 to the water sprinkling part 23.

Accordingly, the treated water generated in the ammonia component removal unit 50 is stored in the treated water storage tank 200 and then supplied to the water sprinkling part 23 through the first treated water supply line 60. Accordingly, the influence of the generation status of the treated water in the ammonia component removal unit 50 can be suppressed, and the treated water can be stably supplied from the treated water storage tank 200 to the water sprinkling part 23.

(3) The ammonia treatment system 10 or 10B according to a third aspect is the ammonia treatment system 10 or 10B according to (1) or (2), in which the ammonia water introduction line 90 includes an introduction line body 91 that connects the water discharging part 25 of the absorption tower 20 and the ammonia component removal unit 50, and an ammonia water storage tank 40 that is provided in a middle of the introduction line body 91 and is capable of storing the ammonia water discharged from the water discharging part 25.

Accordingly, the ammonia water discharged from the water discharging part 25 of the absorption tower 20 is stored in the ammonia water storage tank 40 through the introduction line body 91. Thereafter, the ammonia water stored in the ammonia water storage tank 40 is introduced into the ammonia component removal unit 50 provided outside the absorption tower 20 by the ammonia water introduction line 90. **In** this manner, the ammonia water discharged from the water discharging part 25 of the absorption tower 20 can be temporarily stored in the ammonia water storage tank 40 to some extent, and then supplied to the ammonia component removal unit 50. Therefore, it is not necessary to always operate the ammonia component removal unit 50, and energy saving can be achieved.

(4) The ammonia treatment system 10 or 10B according to a fourth aspect is the ammonia treatment system 10 or 10B according to any one of (1) to (3), further including a dilution tank 30 that is capable of storing an absorption water that absorbs ammonia and introduces an ammonia gas G containing ammonia into the absorption water to reduce an ammonia concentration of the ammonia gas G, and a second treated water supply line 70 that supplies the treated water generated by the ammonia component removal unit 50 as the absorption water to the dilution tank 30, in which the gas introduction part 22 introduces the ammonia gas G diluted in the dilution tank 30 into the casing 21.

Accordingly, by introducing the ammonia gas G into the absorption water in the dilution tank 30, the ammonia gas G having a diluted ammonia concentration can be introduced into the casing 21 of the absorption tower 20, and the ammonia can be more efficiently absorbed in the absorption tower 20. In addition, in the dilution tank 30, the treated water generated by the ammonia component removal unit 50 is supplied as absorption water through the second treated water supply line 70. In this way, the amount of water to be introduced from the outside can be suppressed to effectively use the treated water generated by the ammonia component removal unit 50 and use the treated water as the absorption water in the dilution tank 30.

(5) The ammonia treatment system 10 or 10B according to a fifth aspect is the ammonia treatment system 10 or 10B according to any one of (1) to (4), further including a water intake part 58 that takes in seawater, in which the ammonia component removal unit 50 includes an electrolysis part 51 that generates a seawater electrolytic solution containing sodium hypochlorite by electrolyzing the seawater taken in from the water intake part 58, and a denitrification reaction part 53 that reacts a mixed solution of the seawater electrolytic solution generated by the electrolysis part 51 and the ammonia water.

Accordingly, the seawater electrolytic solution containing sodium hypochlorite is generated by electrolyzing the seawater taken from the water intake part 58, and a denitrification reaction occurs by reacting the mixed solution of the seawater electrolytic solution with the ammonia water, so that ammonia can be removed from the ammonia water. In this way, since ammonia can be removed by using seawater, particularly in a case where such an ammonia treatment system 10 or 10B is provided in the floating structure 1, seawater may be taken from the surrounding sea in which the floating structure 1 floats. Thus, sodium hypochlorite required for ammonia treatment can be easily acquired.

(6) The ammonia treatment system 10 according to a sixth aspect is the ammonia treatment system 10 of any one of (1) to (5), further including an external water introduction unit 80 that introduces water from an outside, and a water switching part 85 that switches water to be supplied to the water sprinkling part 23 between the treated water supplied by the first treated water supply line 60 and the water introduced by the external water introduction unit 80.

Accordingly, the water introduced from the outside by the external water introduction unit 80 can be used as the water to be supplied to the water sprinkling part 23. Accordingly, it is possible to increase the options for water to be sprinkled by the water sprinkling part 23.

(7) The floating structure 1 according to the seventh aspect includes a floating main structure 2 and the ammonia treatment system 10 or 10B according to any one of (1) to (6), provided in the floating main structure 2.

Accordingly, it is possible to provide the floating structure 1 including the ammonia treatment system 10 or 10B capable of sufficiently removing ammonia from water containing ammonia.

### Industrial Applicability

According to the ammonia treatment system and the floating structure of the present disclosure, ammonia can be sufficiently removed from water containing ammonia.

### Reference Signs List

1: floating structure
2: floating main structure
2a: bow
4: superstructure
5A, 5B: broadside
6: bottom
7: upper deck
8: funnel
10, 10B: ammonia treatment system
20: absorption tower
21: casing
21S: internal space
22: gas introduction part
221: gas supply line
222: opening-closing valve
23: water sprinkling part
232: nozzle
24: gas discharging part
241: gas discharge line
25: water discharging part
30: dilution tank
31: ammonia introduction line
315: diffuser pipe
32: mixing part
321: mixer
322: absorption water supply line
323: absorption water circulation pump
33: dilution gas introduction line
33f: dilution fan
35: absorption water introduction line
36: fresh water introduction line
38: diluted absorption water discharge line
40: ammonia water storage tank
41: gas discharge line
42: opening-closing valve
50: ammonia component removal unit
51: electrolysis part
53: denitrification reaction part
58: water intake part
59: discharge part
60: first treated water supply line
60a: one end
60b: other end
61: first opening-closing valve
70: second treated water supply line
70a: one end
70b: other end
71: second opening-closing valve
80: external water introduction unit
81: external water introduction line
82: third opening-closing valve
85: water switching part
90: ammonia water introduction line
91: introduction line body
911: introduction line upstream portion
912: introduction line downstream portion
100, 100B: treated water supply line
101, 101B: main supply line
101a, 101c: one end
101b, 101d: other end
102, 103: pump
200: treated water storage tank
FA: bow-stern direction
G: ammonia gas

## Claims

1. An ammonia treatment system comprising:
an absorption tower having a casing, a gas introduction part that introduces an ammonia gas containing ammonia into the casing, a water sprinkling part that sprinkles water from an upper part of the casing and thereby absorbs the ammonia to generate ammonia water, and a water discharging part that discharges the ammonia water from a lower part of the casing;
an ammonia component removal unit that is provided outside the absorption tower and removes an ammonia component contained in the ammonia water to generate treated water;
an ammonia water introduction line that introduces the ammonia water discharged from the water discharging part into the ammonia component removal unit; and
a first treated water supply line that supplies the treated water generated by the ammonia component removal unit to the water sprinkling part.

2. The ammonia treatment system according to claim 1, further comprising:
a treated water storage tank that stores the treated water generated by the ammonia component removal unit,
wherein the first treated water supply line supplies the treated water stored in the treated water storage tank to the water sprinkling part.

3. The ammonia treatment system according to claim 1 or 2,
wherein the ammonia water introduction line includes
an introduction line body that connects the water discharging part of the absorption tower and the ammonia component removal unit, and
an ammonia water storage tank that is provided in a middle of the introduction line body and is capable of storing the ammonia water discharged from the water discharging part.

4. The ammonia treatment system according to claim 1 or 2, further comprising:
a dilution tank that is capable of storing an absorption water that absorbs ammonia and introduces an ammonia gas containing ammonia into the absorption water to reduce an ammonia concentration of the ammonia gas; and
a second treated water supply line that supplies the treated water generated by the ammonia component removal unit as the absorption water to the dilution tank,
wherein the gas introduction part introduces the ammonia gas diluted in the dilution tank into the casing.

5. The ammonia treatment system according to claim 1 or 2, further comprising:
a water intake part that takes in seawater,
wherein the ammonia component removal unit includes an electrolysis part that generates a seawater electrolytic solution containing sodium hypochlorite by electrolyzing the seawater taken in from the water intake part, and
a denitrification reaction part that reacts a mixed solution of the seawater electrolytic solution generated by the electrolysis part and the ammonia water.

6. The ammonia treatment system according to claim 1 or 2, further comprising:
an external water introduction unit that introduces water from an outside; and
a water switching part that switches water to be supplied to the water sprinkling part between the treated water supplied by the first treated water supply line and the water introduced by the external water introduction unit.

7. A floating structure comprising:
a floating main structure; and
the ammonia treatment system according to claim 1 or 2, provided in the floating main structure.
